# EUROPÄISCHE PATENTSCHRIFT

(11) **EP 1 224 406 B1**
(45) Veröffentlichungstag und Bekanntmachung des Hinweises auf die Patenterteilung: **26.02.2003**
(21) Anmeldenummer: 00974442.6
(22) Anmeldetag: 24.10.2000
(51) Int. Cl.: B60K 41/22, F16D 48/06

(54) **VERFAHREN UND VORRICHTUNG ZUM STEUERN UND REGELN EINER KUPPLUNG IN EINEM STUFENLOSEN AUTOMATGETRIEBE FÜR EIN KRAFTFAHRZEUG**
METHOD AND DEVICE FOR CONTROLLING AND ADJUSTING A CLUTCH IN AN INFINITELY VARIABLE AUTOMATIC GEARBOX
PROCEDE ET DISPOSITIF DE COMMANDE ET DE REGULATION D'UN EMBRAYAGE DANS UNE BOITE AUTOMATIQUE A VARIATION CONTINUE POUR VEHICULE AUTOMOBILE

(30) Priorität: 30.10.1999 DE 19952351
(43) Veröffentlichungstag der Anmeldung: 24.07.2002
(73) Patentinhaber: ZF FRIEDRICHSHAFEN Aktiengesellschaft, 88038 Friedrichshafen (DE)
(72) Erfinder: VOHMANN, Martin, 73730 Esslingen (DE); DREIBHOLZ, Ralf, 88074 Meckenbeuren (DE)
(86) Internationale Anmeldenummer: EP0010457
(87) Internationale Veröffentlichungsnummer: WO01033094

(56) Entgegenhaltungen:
- WO-A-00/13928
- DE-A- 4 409 122
- US-A- 4 648 496
- US-A- 5 010 989

## Beschreibung

Die Erfindung betrifft ein Verfahren zum Steuern und Regeln einer Kupplung in einem stufenlosen Automatgetriebe für ein Kraftfahrzeug, bei dem ein elektronisches Steuergerät mit zwei Regelkreisen das Verhalten der Kupplung bestimmt. Die Erfindung betrifft ferner eine Einrichtung zur Durchführung des Verfahrens zum Steuern und Regeln einer Kupplung in einem Kraftfahrzeugantrieb.

Unter einer Kupplung im Sinne der Erfindung ist eine Anfahrkupplung zu verstehen. Hierunter fallen Kupplungen, die zwischen einer Brennkraftmaschine und einem Automatgetriebe angeordnet sind, Wandlerüberbrückungskupplungen als auch im Automatgetriebe angeordnete Kupplungen und Bremsen, die sowohl zum Anfahren als auch als Schaltkupplung verwendet werden können.

Insbesondere betrifft die Erfindung naßlaufende Anfahrkupplungen, die im Automatgetriebe integriert sein können. Meistens sind solche Anfahrkupplungen jedoch als Baugruppe am Getriebeeingang angeordnet, beispielsweise auch als Anfahrelement in einem automatisierten Stufengetriebe. Speziell in stufenlose Getrieben (Continuously Variable Transmission) wird die nasse Anfahrkupplung auch als Baugruppe am Getriebeabtrieb angeordnet.

Üblicherweise werden Kupplungen und Bremsen im Automatgetriebe oder im automatisierten Stufengetriebe elektrohydraulisch betätigt, unabhängig vom Einsatz des Schaltelements als Gangwechselkupplung, Anfahrkupplung oder Wandlerüberbrückungskupplung. Hierzu werden üblicherweise fahrzeugspezifische, getriebespezifische und fahrzustandsabhängige Größen, wie beispielsweise Achs- und Gangübersetzungen, Motordrehmoment, Motordrehzahl, Fahrpedalstellung, oder ähnliche, in einem elektronischen Getriebesteuergerät verarbeitet und entsprechende kupplungsrelevante Ausgangssignale, beispielsweise zur Drucksteuerung bzw. Druckregelung oder während eines Gangwechsels oder zur Drehzahlregelung während eines Schlupfbetriebs, an ein hydraulisches Steuergerät übermittelt und dort mittels Aktuatoren und Hydraulikventil in hydraulische Steuerdrücke für die entsprechende Kupplung umgesetzt.

Ein Verfahren zum Steuern einer Anfahrkupplung ist unter anderem aus der gattungsbildenden DE 44 09 122 A1 bekannt. Die Anfahrsteuerung besteht hierbei aus zwei Phasen; in einer ersten Phase wird die Eingangsdrehzahl der Kupplung auf eine Solldrehzahl hingeführt, wobei die Solldrehzahl aus der Leistungsvorgabe des Fahrers und einer Fahraktivität festgelegt wird. In der zweiten Phase wird die Differenz der Eingangs- zur Ausgangsdrehzahl der Kupplung nach einem Sollwertverlauf auf Null reduziert.

Aus der DE 39 37 976 A1 ist ein Verfahren zur Regelung einer Kupplung bekannt, die zur Schwingungsentkopplung dient. Der Schlupf in der Kupplung wird hierbei in Abhängigkeit einer am Getriebeausgang ermittelten Drehungleichförmigkeit verändert.

Aus der EP 0 214 989 B2 wiederum ist bekannt, eine im Automatgetriebe integrierte Kupplung als Anfahrelement zu verwenden.

Die bislang unveröffentlichte DE 198 40 573 der Anmelderin beschreibt ein Verfahren zum Steuern und Regeln einer Kupplung in einem stufenlosen Automatgetriebe für ein Kraftfahrzeug, wonach die Kupplung während zwei Fahrzuständen mittels eines ersten Regelkreises gesteuert und geregelt wird; die Regelgröße entspricht hierbei dem Istwert einer Differenzdrehzahl der Kupplung. Der erste Zustand entspricht einem Anfahrvorgang und der zweite Zustand entspricht dem Fahren mit variabler Übersetzung.

Aus der ebenfalls noch unveröffentlichten DE 198 40 572 der Anmelderin ist ein Verfahren zum Steuern und Regeln einer Kupplung in einem automatisierten Stufengetriebe mit Zugkraftunterbrechung, bzw. in einem automatisierten lastschaltbaren Stufengetriebe bekannt. Dabei wird während drei Fahrzuständen mittels eines ersten Regelkreise gesteuert, bzw. geregelt; die Regelgröße entspricht dem Istwert einer Differenzdrehzahl der Kupplung. Der erste Zustand entspricht einem Anfahrvorgang, der zweite Zustand entspricht dem Fahren mit konstanter Übersetzung und der dritte Zustand liegt dann vor, wenn eine Lastschaltung, bzw. eine Verstellung der Übersetzung von einer ersten in eine zweite Übersetzungssstufe des Automatgetriebes initiiert wird.

Der vorliegenden Erfindung liegt die Aufgabe zugrunde, ausgehend von dem vorbeschriebenen Stand der Technik, ein Verfahren zum Steuern und Regeln einer Kupplung in einem stufenlosen Automatgetriebe für ein Kraftfahrzeug sowie eine Vorrichtung zur Durchführung des Verfahrens zum Steuern und Regeln der Kupplung anzugeben und diese im Hinblick auf die Mehrfachnutzung einer einzigen Kupplung, insbesondere bezüglich verbesserter Regelqualität und Regeldynamik, in Verbindung mit einem stufenlosen Automatgetriebe weiterzuentwickeln.

Diese Aufgabe wird erfindungsgemäß durch die Gegenstände der unabhängigen Ansprüche gelöst. Weitere vorteilhafte Ausgestaltungen der Erfindung sind in den Unteransprüchen beschrieben.

Die Erfindung besteht vorteilhafterweise darin, daß zur Steuerung und Regelung der Kupplung während eines ersten Fahrzustands der erste Regelkreis verwendet wird; die Regelgröße entspricht dem Istwert der Motordrehzahl n_MOT_IST, welche der Eingangsdrehzahl der Kupplung entspricht. Während des zweiten Fahrzustands wird ein zweiter Regelkreis verwendet, dessen Regelgröße dem Istwert der Differenzdrehzahl der Kupplung dnK_IST äquivalent ist, und schließlich wird während des dritten Fahrzustands die Kupplung mit einem gesteuerten, von verschiedenen Einflußgrößen abhängigen Druckwert beaufschlagt. Die drei Fahrzustände entsprechen hierbei einem Anfahrvorgang unterhalb einer-Fahrzeuggrenzgeschwindigkeit im Zugbetrieb als erstem Zustand, dem Fahren jenseits des Anfahrvorgangs oberhalb einer Fahrzeuggrenzgeschwindigkeit mit einem positiven oder negativen Moment im Zug- bzw. Schubbetrieb als zweitem Zustand sowie dem Fahren unterhalb einer Fahrzeuggrenzgeschwindigkeit mit negativem Moment am Abtrieb im Schubbetrieb während des dritten Zustands, wobei sich der Anfahrvorgang von den anderen Fahrzuständen dadurch unterscheidet, daß die Fahrzeuggeschwindigkeit kleiner einem Grenzwert ist und der Fahrzeugmotor unterhalb dieser Grenzgeschwindigkeit abgewürgt werden kann.

Durch das erfindungsgemäße Verfahren wird vorteilhafterweise eine bessere Reaktion der Getriebesteuerung auf Lastwechsel erreicht, insbesondere beim Gaswegnehmen in dem dritten Zustand, da hier der Druckwert der Kupplung nur gesteuert und nicht geregelt ist.

Ferner wird die Kupplungsdifferenzdrehzahl nicht bis zu einem Wert Null nachgeführt, so daß hierdurch vorteilhafterweise eine Schwingungsentkopplung zwischen dem Motor und dem Getriebe erreicht wird.

In einer vorteilhaften Weiterbildung der Erfindung wird vorgeschlagen, daß die Übersetzungsänderung in dem stufenlosen Automatgetriebe maßgeblich von einem dritten Regelkreis bestimmt wird und daß der erste und dritte bzw. der zweite und dritte Regelkreis über ein Entkopplungsnetzwerk miteinander verbunden sind, wobei das Entkopplungsnetzwerk jeweils einen ersten und einen zweiten Signalweg aufweist.

Vorteilhafterweise wird hiermit vorgeschlagen, daß für die Verstellung der Übersetzung von einem ersten in ein zweites Übersetzungsverhältnis ein eigener Regelkreis, nämlich der dritte Regelkreis, verwendet wird. Für diesen Fall, also dem Zustand während der Übersetzungsänderung, werden ferner die beiden im Einsatz befindlichen Regelkreise über ein Entkopplungsnetzwerk miteinander verbunden, wobei vorteilhafterweise nur die beiden im Einsatz befindlichen Regler sich in ihrer Wirkung nicht gegenseitig beeinflussen.

Es wird ferner vorgeschlagen, daß bei einer Übersetzungsänderung von einem ersten in ein zweites Übersetzungsverhältnis des Automatgetriebes während des ersten Fahrzustands der erste Regelkreis mittels des Entkopplungsnetzwerkes via einem ersten Signalweg auf den dritten Regelkreis einwirkt und daß der dritte Regelkreis mittels eines Entkopplungsmittels des Entkopplungsnetzwerkes via zweitem Regelkreis auf den ersten Regelkreis zurückwirkt.

Bei einer Übersetzungsänderung von einem ersten in ein zweites Übersetzungsverhältnis während des zweiten Fahrzustandes wirkt der zweite Regelkreis mittels des Entkopplungsnetzwerkes via erstem Signalweg auf den dritten Regelkreis und der dritte Regelkreis wirkt mittels des Entkopplungsnetzwerkes via zweitem Signalweg auf den zweiten Regelkreis.

In einer Weiterbildung der Erfindung wird vorgeschlagen, das Druckniveau pAK der Kupplung im ersten und im zweiten Zustand aus der Summe aus einem Offsetwert pAK_OFF und einem Summenwert pSUM zu berechnen. Der Summenwert pSUM wird maßgeblich aus der Bilanz von dem gesteuerten Moment MK(ST) der Kupplung, dem geregelten Summenmoment MK(RE)' der Kupplung und entkoppeltem Lastschaltmoment MLS_ENT bestimmt.

Das gesteuerte Moment MK(ST) wird maßgeblich aus dem dynamischen Moment der Kupplung MDYN_K und dem Motormoment MMOT bestimmt.

Das geregelte Summenmoment MK(RE)' der Kupplung wird aus dem dynamischen Motormoment MDYN_MOT und einem geregelten Moment MK(RE) bestimmt.

Das geregelte Moment MK(RE) im ersten Fahrzustand wird maßgeblich aus dem Soll-/Ist-Vergleich einer der Motordrehzahl n_MOT äquivalenten Größe und einer Leistungsvorgabe DKI eines Fahrers mittels eines Reglers bestimmt.

Die übersetzungsabhängige Solldifferenzdrehzahl dn_SW (i) für einen Anfahrgang des Automatgetriebes wird im zweiten Fahrzustand über ein Kennfeld KF(i) bestimmt. Dieses Kennfeld stellt dabei eine Zuordnung von Leistungsvorgabe des Fahrers DKI und Abtriebssdrehzahl nAB der Kupplung dar.

Das geregelte Moment im zweiten Fahrzustand MK(RE) wird maßgeblich aus dem Soll-/Ist-Vergleich der Drehzahldifferenz dnK_SW, dnK_IST der Kupplung und einer Leistungsvorgabe DKI eines Fahrers mittels eines Reglers bestimmt.

Vorteilhafterweise beinhaltet der Regler einen begrenzten Integrator, wobei dem Integrator als Eingangsgrößen die Regelabweichung aus dem Soll-/Ist-Vergleich der Drehzahldifferenz dnK_SW, dnK_IST der Kupplung, die Verstellgeschwindigkeit der Leistungsvorgabe DKI und dem Verhältnis Ist- zu Sollwert der Differenzdrehzahl dnK_IST/dnK_SW der Kupplung zugeführt wird.

Der Sollwert der Differenzdrehzahl der Kupplung dnK_SW ergibt sich vorteilhafterweise aus der Addition eines Sollwert-Offset dnLS_SW und einer übersetzungsabhängigen Differenzdrehzahl der Kupplung dn_SW(i).

Vorteilhafterweise wird bei einem Übergang von dem ersten oder dritten Fahrzustand in den zweiten Fahrzustand der Sollwert der Differenzdrehzahl dnK_SW über einen Filter, insbesondere ein dynamisches Verzögerungsglied geleitet, wobei als Anfangswert des Verzögerungsglieds der aktuelle Istwert der Differenzdrehzahl dnK_IST gesetzt wird.

Im zweiten Zustand wird der Sollwert-Offset der Differenzdrehzahl dnLS_SW der Kupplung während einer Übersetzungsänderung von einer ersten in eine zweite Übersetzungsstufe des Automatgetriebes erhöht.

Die Kennfelder sind hierbei derart gestaltet, daß sich bei einer Fahrzeuggeschwindigkeit v kleiner einem Grenzwert GW eine erhöhte Differenzdrehzahl dn_SW(i) der Kupplung ergibt. Hierdurch wird ein aktiver Abwürgeschutz für Nichtanfahrgänge, also z. B. für das Fahren bei konstanter Übersetzung des Automatgetriebes, erzielt.

Vorteilhafterweise wird auch im zweiten Fahrzustand bei einer Fahrzeuggeschwindigkeit v kleiner einem Grenzwert GW eine erhöhte Differenzdrehzahl dn_SW(i) der Kupplung als Abwürgeschutz berechnet. Dabei ist die erhöhte Differenzdrehzahl dn_SW(i) größer eingestellt als die Differenz aus der minimalsten Drehzahl der Brennkraftmaschine n_MOT_MIN und der Abtriebsdrehzahl der Kupplung nAB.

Im dritten Fahrzustand ergibt sich das Druckniveau pAK der Kupplung aus einem Druckwert, welcher von einer oder mehreren der folgenden Größen abhängig ist: Drosselklappenstellung, Bremsbetätigung, Bremsdruck, Motormoment, Lastschaltung oder ähnliches und wobei der Druckwert eine gesteuerte Größe ist.

Vorteilhafterweise wird auch eine Vorrichtung zur Durchführung eines Verfahrens zum Steuern und Regeln einer Kupplung in einem stufenlosen Automatgetriebe für ein Kraftfahrzeug angegeben. Hierzu ist ein elektronisches Steuergerät mit einem ersten und einem zweiten Regelkreis vorgesehen, wobei die Regelgröße des ersten Regelkreises dem Istwert der Motordrehzahl und die Regelgröße des zweiten Regelkreises dem Istwert einer Differenzdrehzahl der Kupplung äquivalent ist.

Weiterhin ist ein dritter Regelkreis vorgesehen, der über ein Entkopplungsnetzwerk mit dem ersten und dem zweiten Regelkreis verbunden ist, und wobei der dritte Regelkreis maßgeblich die Lastschaltung bestimmt.

Ferner weist das Entkopplungsnetzwerk je einen ersten und einen zweiten Signalweg zwischen dem ersten und dritten und zwischen dem zweiten und drittel Regelkreis auf.

Die Erfindung ist nachstehend anhand des in den Zeichnungen dargestellten Ausführungsbeispiels erläutert.

Es zeigen:
- Fig. 1: eine Übersicht des ersten und zweiten Regelkreises;
- Fig. 2: einen Funktionsblock Sollwert-Vorgabe;
- Fig. 3: einen Funktionsblock Regler;
- Fig. 4: ein Kennfeld für Nicht-Anfahrübersetzungen.

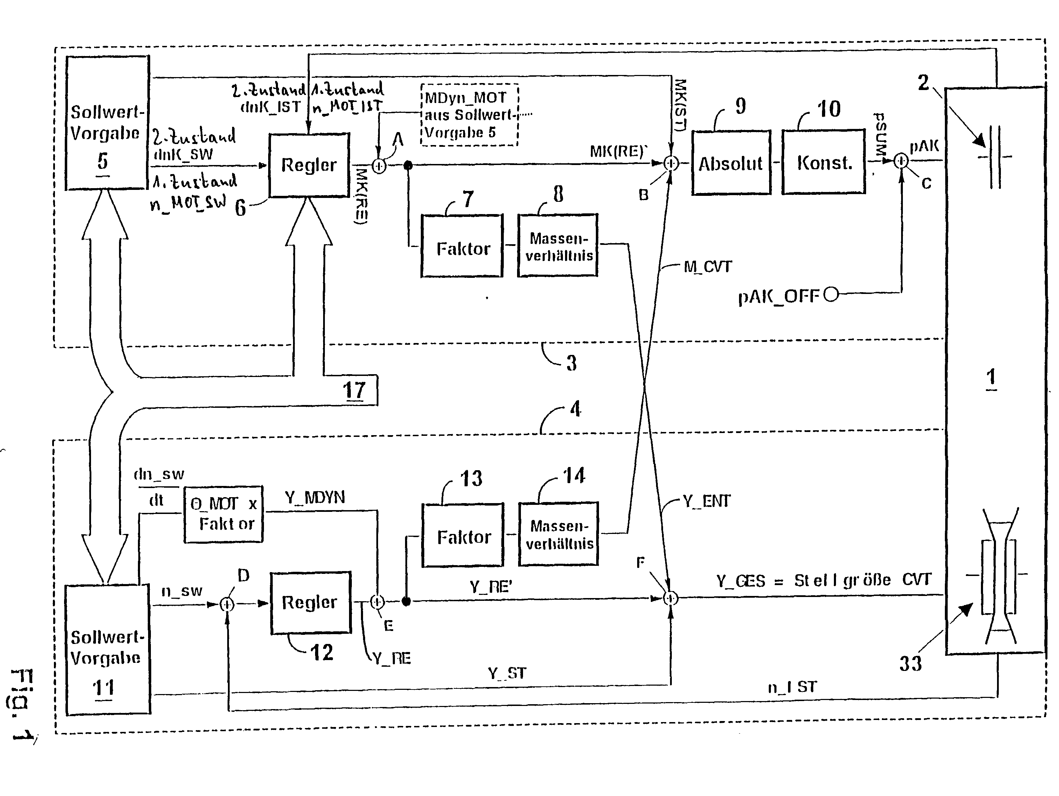

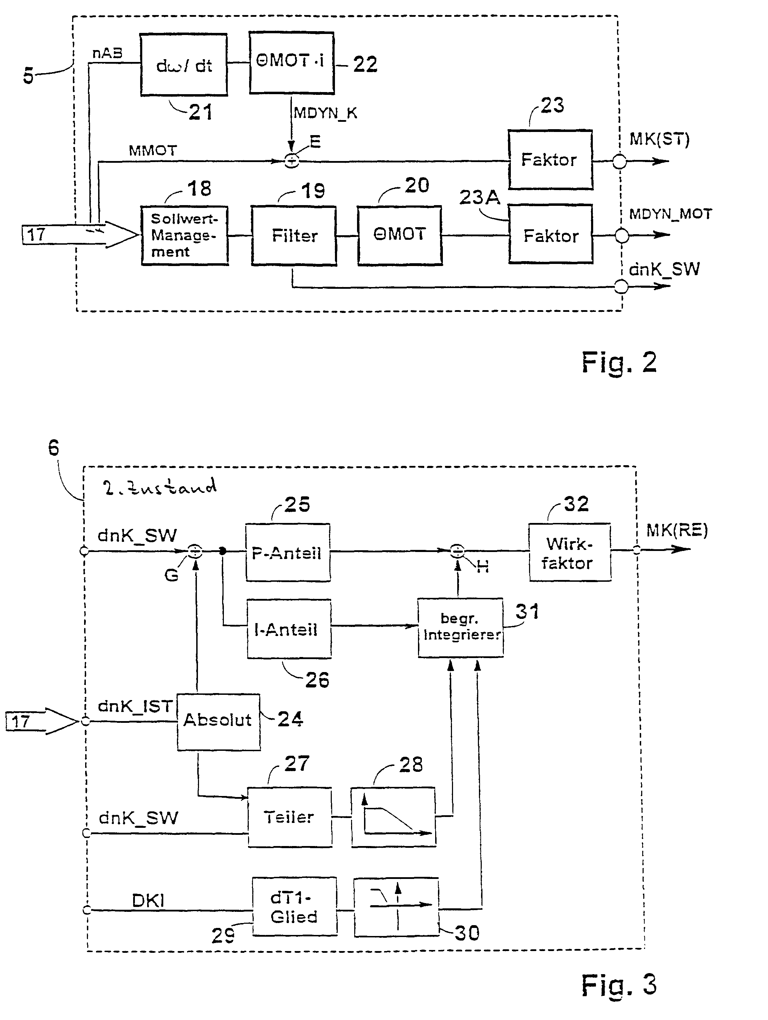

Fig. 1 zeigt eine Übersicht der beiden Regelkreise. Mit Bezugszeichen 3 ist der erste Regelkreis zur Steuerung und Regelung der Kupplung 2 bezeichnet. Mit Bezugszeichen 4 ist der zweite Regelkreis zur Steuerung und Regelung eines stufenloses Getriebes 1 bezeichnet. In Fig. 1 ist mit dem Bezugszeichen 33 ein Variator dargestellt.
Unter Kupplung 2 im Sinne der Erfindung ist eine Anfahrkupplung zu verstehen. Diese kann dem stufenlosen Getriebe 1 vorgeschaltet sein oder der Wandlerüberbrückungskupplung oder einer im Getriebe integrierten Kupplung entsprechen.
Sowohl dem ersten als auch dem zweiten Regelkreis 3, 4 werden Eingangsgrößen 17 zugeführt. Eingangsgrößen 17 sind: das Signal der Leistungsvorgabe durch einen Fahrer, z. B. Drosselklappeninformation DKI bzw. deren Gradient, das Moment einer nicht dargestellten Brennkraftmaschine, welches das stufenlose Getriebe 1 antreibt und die Ein-/Ausgangsdrehzahl der Kupplung 2. Der erste Regelkreis 3 besteht aus den Blöcken: Sollwert-Vorgabe 5, Regler 6, Faktor 7, Massenverhältnis 8, Absolutwert 9 und Konstante 10. Die Soilwert-Vorgabe 5 liefert als Ausgangsgrößen den Sollwert der Differenzdrehzahl dnK_SW Kupplung 2 und das gesteuerte Moment MK(ST) der Kupplung 2 sowie das dynamische Motormoment MDYN_MOT. Die innere Struktur der Sollwert-Vorgabe 5 wird in Verbindung mit der Fig. 2 erklärt. Am Regler 6 liegen die Eingangsgrößen 17, der Regler-Sollwert sowie der Istwert an. Im ersten Zustand entspricht der Regler-Sollwert der Motor-Solldrehzahl n_MOT_SW und der Istwert der Motor-Istdrehzahl n_MOT_IST. Im zweiten Zustand entspricht der Regler-Sollwert der Soll-Differenzdrehzahl an der Kupplung 2 dnK_SW und der Istwert der Ist-Differenzdrehzahl an der Kupplung 2 dnK_IST. Die innere Struktur des Reglers 6 wird in Verbindung mit der Fig. 3 erklärt. Ausgangsgröße des Reglers 6 ist das geregelte Moment MK(RE) der Kupplung 2. Aus dem geregelten Moment MK(RE) der Kupplung 2 und dem dynamischen Motormoment MDYN_MOT ergibt sich das geregelte Summenmoment MK(RE)', Summationspunkt A. Diese wird am Punkt B mit dem aus der Sollwert-Vorgabe 5 stammenden gesteuerten Moment MK(ST) der Kupplung 2 und dem entkoppelnden Moment M_CVT des stufenlosen Getriebes summiert. Von dieser Summe wird mittels des Funktionsblocks 9 der Absolutwert gebildet und das Ergebnis mit einer Konstanten gewichtet, Funktionsblock 10. Ausgangsgröße ist ein summierter Druck pSUM. Diesem summierten Druck pSUM wird am Summationspunkt C ein Druck-Offset pAK_OFF überlagert. Das sich hieraus ergebende Druckniveau pAK ist das auf die Kupplung 2 wirkende Druckniveau. Der zweite Regelkreis 4 besteht aus: Sollwert-Vorgabe 11, Regler 12, Faktor 13, Massenverhältnis 14 sowie dem Produkt aus Motorträgheitsmoment mal dem Faktor 13. Der zweite Regelkreis 4 bestimmt den Ablauf der stufenlosen Verstellung. Aus den Eingangsgrößen 17 bestimmt der Funktionsblock Sollwert-Vorgabe 11 den Sollwert n_SW der stufenlosen Verstellung, den gesteuerten Anteil der Stellgröße des CVT Y_ST. Der Sollwert n_SW wird am Summationspunkt D mit dem Istwert n_IST der stufenlosen Verstellung verglichen. Der Istwert n_IST bestimmt sich aus Ausgangsgrößen des stufenlosen Getriebes 1. Die sich ergebende Regelabweichung ist die Eingangsgröße des Reglers 12. Der Reglerausgangswert Y_RG wird am Summationspunkt E zu dem dynamischen Momentenanteil Y_MDYN aus der Sollwert-Vorgabe 11 addiert. Hieraus ergibt sich der geregelte Anteil Y_RE'. Dieser wird am Summationspunkt F zu dem gesteuerten Anteil Y_ST und zu dem entkoppelnden Anteil Y_ENT addiert. Aus dem Ergebnis wird eine Stellgröße für das stufenlose Getriebe gebildet. Ergebnis ist die Stellgröße Y_GES für den Variator 33.

Der erste und zweite Regelkreis 3, 4 sind über ein Entkopplungsnetzwerk miteinander verbunden. Das Entkopplungsnetzwerk beinhaltet einen ersten Signalweg, in dem der Funktionsblock 7 und der Funktionsblock 8 angeordnet sind. Die Eingangsgröße des ersten Signalwegs ist das geregelte Summenmoment MK(RE)'. Dieses wird mit einem Faktor, Funktionsblock 7, multipliziert. Dieser Faktor wird aufgrund von Versuchen abgestimmt. Das Ergebnis hieraus wird im Funktionsblock 8 mit dem Massenverhältnis von Motor-Masse zu der Summe aus Motor-Masse und Getriebe-Masse gewichtet. Ausgangsgröße ist sodann der entkoppelnde Anteil Y_ENT der Kupplung 2. Der zweite Signalweg des Entkopplungsnetzwerks weist die Funktionsblöcke 13 und 14 auf, deren Eingangsgröße ist der geregelte Anteil Y_RE' der stufenlosen Schaltung. Ausgangsgröße des zweiten Signalwegs ist das entkoppelnde Moment der stufenlosen Übersetzung M_ENT.

In Fig. 2 ist die innere Struktur der Sollwert-Vorgabe 5 dargestellt. Dieser werden die Eingangsgrößen 17 zugeführt. Im Funktionsblock 18, Sollwert-Management, wird aus den Eingangsgrößen Drehzahl der Brennkraftmaschine, Drosselklappeninformation DKI und Moment der Brennkraftmaschine ein Roh-Sollwert der Differenzdrehzahl der Kupplung 2 bestimmt. Dieser Wert wird sodann im Filter 19, üblicherweise als PT1-Glied mit Gradienten-Begrenzung ausgeführt, gefiltert. Eine Ausgangsgröße des Filters 19 ist der Sollwert dnk_SW der Differenzdrehzahl der Kupplung 2. Dieser Sollwert wird am Ausgang der Sollwert-Vorgabe 5 bereitgestellt. Eine weitere Ausgangsgröße des Filters 19 wird im Funktionsblock 20 mit dem Motorträgheitsmoment Theta-MOT und einem Faktor, Bezugszeichen 23A, verknüpft. Ausgangsgröße ist sodann das dynamische Moment der Brennkraftmaschine MDYN_MOT. Aus der Eingangsgröße Abtriebsdrehzahl der Kupplung nAB wird mittels des Funktionsblocks 21 der Winkelgeschwindigkeitsgradient dOmega/dt ermittelt. Das Ergebnis wird im Funktionsblock 22 mit dem Motorträgheitsmoment Theta-MOT und der aktuellen Übersetzung des stufenlosen Getriebes i multipliziert. Ausgangsgröße ist das dynamische Moment MDYN_K an der Kupplung 2 während einer stufenlosen Verstellung. Hierbei gilt folgende Beziehung:
- MDYN_K = f: (Theta-MOT, i, di/dt, Omega, dOmega/dt)
- MDYN_K:: dynamisches Moment Kupplung
- Theta-MOT:: Trägheitsmoment Brennkraftmaschine
- i:: aktuelle Übersetzungsstufe
- dOmega/dt:: Gradient Winkelgeschwindigkeit Kupplung
- di/dt:: aktuelle Übersetzungsgradient
- Omega:: Winkelgeschwindigkeit Kupplung

Am Summationspunkt E wird sodann dieses dynamische Moment der Kupplung 2 mit dem von der Brennkraftmaschine abgegebenen Moment MMOT verknüpft. Das Ergebnis wird am Summationspunkt F zu dem zuvor berechneten dynamischen Moment der Brennkraftmaschine MDYN_MOT addiert. Das Ergebnis wird im Funktionsblock 23 mit einem abstimmbaren Faktor gewichtet, dessen Ausgangsgröße das gesteuerte Moment MK(ST) der Kupplung 2 ist.

In Fig. 3 ist die innere Struktur des Reglers 6 dargestellt. Diesem werden die Eingangsgrößen 17 sowie der Sollwert dnK_SW und der Istwert dnK_IST der Differenzdrehzahl der Kupplung 2 zugeführt. Aus dem Istwert dnK_IST wird im Funktionsblock 24 der Absolutwert gebildet. Dieser Absolutwert ist sodann die Eingangsgröße für den Teiler 27 bzw. den Summationspunkt G. Auf den Teiler 27 ist als zweite Eingangsgröße der Sollwert dnK_SW der Differenzdrehzahl der Kupplung 2 geführt. Der Quotient ist auf den Funktionsblock 28, Kennlinie dynamisches Absenken, geführt. Über diese Kennlinie wird bei sehr kleinen Schlupfwerten, z. B. kleiner 10 Umdrehungen, der Eingangswert des Intergrierers 31 künstlich vergrößert. Hierdurch wird eine zusätzliche rampenförmige Druckreduzierung erzielt. Der Einsatzpunkt ergibt sich aus dem Verhältnis von Ist- zu Sollwert der Drehzahldifferenz der Kupplung 2.
Die Eingangsgröße Drosselklappeninformation DKI ist das Eingangssignal für ein dT1-Glied 29. Das Ausgangssignal dieses Filters ist sodann das Eingangssignal für die Kennlinie "schnell Öffnen" 30. Über diese Kennlinie wird in Abhängigkeit der Leistungswunsch des Fahrers bzw. dessen Gradient bei schneller Gasrücknahme der Eingangswert des Integrierers 31 künstlich vergrößert. Hieraus ergibt sich eine zusätzliche rampenförmige Druckreduzierung. Die Druckreduzierung ist über die Kennlinie veränderbar.

Am Summationspunkt G wird der Sollwert dnK_SW mit dem im Funktionsblock 24 gebildeten Absolutwert des Istwertes der Differenzdrehzahl Kupplung 2 summiert. Das Ergebnis wird sodann parallel zum einen über einen Funktionsblock P-Anteil 25 und zum zweiten über einen I-Anteil 26 geführt. Die Ausgangsgröße des P-Anteils 25 wirkt auf den Summationspunkt H. Die Ausgangsgröße des Funktionsblockes 26 wirkt auf den begrenzten Integrierer 31. Der Ausgangswert des begrenzten Integrierers 31 wird am Summationspunkt H mit dem Proportional-Anteil aus dem Funktionsblock 25 verknüpft und auf den Funktionsblock 32, Wirkfaktor, geführt. Über den Wirkfaktor wird bestimmt, in welche Richtung das aktuelle Regelmoment wirken soll. Dies ist zur Bestimmung des entkoppelnden Anteils Y_ENT notwendig.

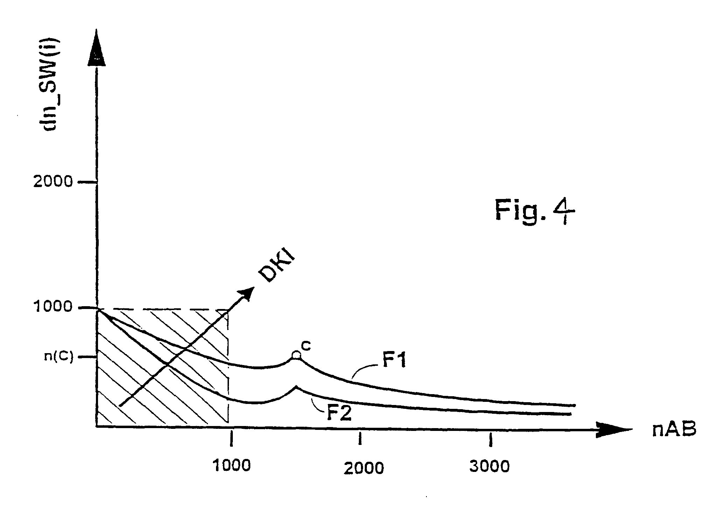

In Fig. 4 ist ein gangabhängiges Kennfeld KF(i) dargestellt. Über dieses Kennfeld KF(i) wird die Differenzdrehzahl dn_SW(i) für Nicht-Anfahrübersetzungen des stufenlosen Getriebes bestimmt. Das Kennfeld enthält einen durch die beiden Begrenzungskennlinien F1 und F2 definierten Bereich. Die Begrenzungslinie F2 entspricht 0 % und die Begrenzungslinie F1 entspricht 100 % Drosselklappeninformation DKI. Auf der Begrenzungslinie F1 ist ein Punkt C eingezeichnet. Diese Drehzahlüberhöhung, Wert n(c), bewirkt, daß die Kupplung im schlupfenden Zustand gehalten wird, so daß eine aktive Schwingungsentkopplung erzielt wird. Innerhalb des Kennfelds ist ein schraffiert gezeichneter Bereich dargestellt. Dieser Bereich dient dem Abwürgeschutz, d. h., bei kleinen Abtriebsdrehzahlen nAB der Kupplung 2 wird diese mit einem definierten Sollwert der Differenzdrehzahl beaufschlagt.
Der Abwürgeschutz kann auch gemäß folgender Beziehung berechnet werden:
dnK_SW(i) > NMOT_MIN-nAB
- NMOT_MIN:: minimalste Drehzahl der Brennkraftmaschine
- nAB:: Abtriebsdrehzahl der Kupplung 2

Es existieren für verschiedene Übersetzungsbereiche eigene Kennfelder. Der Übergang vom ersten KF(1) auf ein zweites Kennfeld KF(i) erfolgt während der stufenlosen Verstellung des stufenlosen Getriebes 1.

Der Ablauf des erfindungsgemäßen Verfahrens ist folgendermaßen:
1. Zustand: Das Anfahren erfolgt über einen Motordrehzahlregler. Das Fahrzeug setzt sich in Bewegung bis nach dem Unterschreiten der Differenzdrehzahlschwelle an der Kupplung 2 bzw. nach dem Überschreiten der Grundgeschwindigkeit der Übergang in den zweiten Zustand erfolgt.
2. Zustand: Jetzt wird die Differenzdrehzahl an der Kupplung geregelt. Der Sollwert wird dem dem Gang entsprechenden Kennfeld entnommen. Um einen sanften Übergang zu bekommen, wird dem dem Sollwertgenerator nachgeschalteten Filter als Anfangswert die aktuelle Ist-Differenzdrehzahl dnK_IST eingeprägt. So wird eine stetige Änderung des Ist-Differenzdrehzahlverlaufs und damit ein stetiger Kupplungsmomentverlauf erzielt.

Wird nun eine stufenlose Verstellung initiiert, so wird vom Kennfeld KF(i1) auf ein Kennfeld KF(i2) gemäß Fig. 4 gewechselt. Während der stufenlosen Verstellung wird über das Entkopplungsnetzwerk via zweitem Signalweg dem gesteuerten Moment MK(ST) und geregelten Summenmoment MK(RE)' ein Entkopplungsanteil M_CVT addiert. Via dem ersten Signalweg wird dem zu verstellenden Variator 33 ein Entkopplungsanteil Y_ENT der Kupplung 2 addiert.

### Bezugszeichen

- 1: stufenloses Getriebe, CVT
- 2: Kupplung
- 3: erster Regelkreis
- 4: zweiter Regelkreis
- 5: Sollwert-Vorgabe
- 6: Regler
- 7: Faktor
- 8: Berechnungsblock Massenverhältnis
- 9: Absolutwert
- 10: Konstante
- 11: Sollwert-Vorgabe
- 12: Regler
- 13: Faktor
- 14: Berechnungsblock: Massenverhältnis
- 17: Eingangsgrößen
- 18: Sollwert-Management
- 19: Filter
- 20: Trägkeitsmoment
- 21: Berechnungsblock dOmega/dt
- 22: Berechnungsblock
- 23, 23A: Faktor
- 24: Absolutwert
- 25: P-Anteil
- 26: I-Anteil
- 27: Teiler
- 28: Kennlinie dynamisches Absenken
- 29: dT1-Glied
- 30: Kennlinie "schnell Öffnen"
- 31: begrenzter Intergrierer
- 32: Wirkfaktor
- 33: Variator

- dn_SW(i): übersetzungsabhängige Differenzdrehzahl
- dnK_SW: Sollwert Differenzdrehzahl Kupplung
- dnK_IST: Istwert Differenzdrehzahl Kupplung
- MK(ST): gesteuertes Moment Kupplung
- MK(RE): geregeltes Moment Kupplung
- MK(RE)': geregeltes Summenmoment Kupplung
- pAK_OFF: Druckoffset Anfahrkupplung
- pSUM: summmierter Druck
- pAK: Druckniveau Kupplung
- MDYN_K: dynamisches Moment Kupplung
- pLS_OFF: Druckoffset Lastschaltung
- nEIN: Eingangsdrehzahl Kupplung
- nAB: Abtriebsdrehzahl Kupplung
- n_MOT_SW: Sollwert Drehzahl
- n_MOT_IST: Istwert Drehzehl
- n_MOT_MIN: minimalste Drehzahl Brennkraftmaschine
- Y_ST: gesteuerter Anteil der Stellgröße des Variators
- Y_RE: geregelter Anteil der Stellgröße des Variators
- Y_RE': Summe der Anteile Y_RE und Y_MDYN
- Y_ENT: entkoppelnder Anteil der Stellgröße des Variators
- Y_MDYN: Sollgradienten-Anteil der Stellgröße des Variators
- Y_GES: Stellgröße für Variator
- Y_RG: Reglerausgangswert
- MMOT: Motormoment
- MDYN_MOT: dynamisches Motormoment
- M_CVT: entkoppelndes Moment der Variatorregelung
- DKI: Drosselklappeninformation = Laststellung
- dnLS_SW: Sollwert-Offset
- Theta_MOT: Motorträgheitsmoment
- i_CVT: aktuelle Variatorübersetzung
- i1, i2: Übersetzungsstufe
- KF(i): Kennfeld
- v: Fahrzeuggeschwindigkeit
- GW: Grenzwert Fahrzeuggeschwindigkeit

## Patentansprüche

1. Verfahren zum Steuern und Regeln einer Kupplung in einem stufenlosen Automatgetriebe für ein Kraftfahrzeug, bei dem ein elektronisches Steuergerät mittels eines ersten bzw. eines zweiten Regelkreises das Verhalten der Kupplung bestimmt, wobei zwei Fahrzustände vorgesehen sind und der erste Zustand einem Anfahrvorgang unterhalb einer Fahrzeuggrenzgeschwindigkeit im Zugbetrieb, der zweite Zustand dem Fahren oberhalb einer Fahrzeuggrenzgeschwindigkeit entspricht und daß eine stufenlose Übersetzungsänderung von einem ersten (i1) in ein zweites Übersetzungsverhältnis (i2) durchführbar ist, wobei zur Steuerung und Regelung der Kupplung während des ersten Fahrzustands der erste Regelkreis verwendet wird und dessen Regelgröße dem Istwert der Motordrehzahl (n_MOT_IST) äquivalent ist und daß während des zweiten Fahrzustands ein zweiter Regelkreis verwendet wird, dessen Regelgröße dem Istwert einer Differenzdrehzahl (dnK_IST) der Kupplung äquivalent ist, **dadurch gekennzeichnet, daß** während eines dritten Fahrzustands, welcher dem Fahren unterhalb einer Fahrzeuggrenzgeschwindigkeit im Schubbetrieb entspricht, die Kupplung mit einem gesteuerten von verschiedenen Einflußgrößen abhängigen Druckwert beaufschlagt wird und daß der Istwert der Differenzdrehzahl (dnK_IST) der Kupplung nicht bis zu einem Wert Null nachgeführt ist.

2. Verfahren nach Anspruch 1, **dadurch gekennzeichnet, daß** die Übersetzungsänderung maßgeblich von einem dritten Regelkreis bestimmt wird und der erste und dritte bzw. der zweite und dritte Regelkreis über ein Entkopplungsnetzwerk miteinander verbunden sind, wobei das Entkopplungsnetzwerk jeweils einen ersten und einen zweiten Signalweg aufweist.

3. Verfahren nach Anspruch 2, **dadurch gekennzeichnet, daß** bei einer Übersetzungsänderung von einem ersten (i1) in ein zweites Übersetzungsverhältnis (i2) des Automatgetriebes während des ersten Fahrzustandes der erste Regelkreis mittels des Entkopplungsnetzwerkes via erstem Signalweg auf den dritten Regelkreis einwirkt und der dritte Rgelkreis mittels des Entkopplungsnetzwerkes via zweitem Signalweg auf den ersten Regelkreis einwirkt.

4. Verfahren nach Anspruch 2, **dadurch gekennzeichnet, daß** bei einer Übersetzungsänderung von einem ersten (i1) in ein zweites Übersetzungsverhältnis (i2) des Automatgetriebes während des zweiten Fahrzustandes der zweite Regelkreis mittels des Entkopplungsnetzwerkes via erstem Signalweg auf den dritten Regelkreis einwirkt und der dritte Regelkreis mittels des Entkopplungsnetzwerkes via zweitem Signalweg auf den zweiten Regelkreis einwirkt.

5. Verfahren nach Anspruch 1, **dadurch gekennzeichnet, daß** das Druckniveau (pAK) der Kupplung sich im ersten und zweiten Zustand aus einem Offsetwert (pAK_OFF) und einem Summenwert (pSUM) ergibt (pAK = pAK_OFF + pSUM), wobei der Summenwert (pSUM) maßgeblich aus der Bilanz von gesteuertem Moment (MK(ST)) der Kupplung, geregeltem Summenmoment (MK(RE)') der Kupplung und entkoppelndem Lastschaltmoment (MLS_ENT) bestimmt wird (pSUM = f(MK(ST), MK(RE)', MLS_ENT)).

6. Verfahren nach Anspruch 5, **dadurch gekennzeichnet, daß** das gesteuerte Moment (MK(ST)) maßgeblich aus dem dynamischen Moment der Kupplung (MDYN_K) und dem Motormoment (MMOT) bestimmt wird (MK(ST) = f(MDYN_K, MMOT).

7. Verfahren nach Anspruch 5, **dadurch gekennzeichnet, daß** das geregelte Summenmoment (MK(RE)') der Kupplung aus dem dynamischen Motormoment (MDYN_MOT) und einem geregelten Moment (MK(RE)) der Kupplung bestimmt wird.

8. Verfahren nach Anspruch 7, **dadurch gekennzeichnet, daß** das geregelte Moment (MK(RE)) im ersten Fahrzustand maßgeblich aus dem Soll-/Ist-Vergleich einer der Motordrehzahl äquivalenten Größe und einer Leistungsvorgabe (DKI) eines Fahrers mittels eines Reglers bestimmt wird.

9. Verfahren nach einem der vorangehenden Ansprüche, **dadurch gekennzeichnet, daß** die übersetzungsabhängige Solldrehzahl (n_Mot_SW(i)) für einen Anfahrgang des Automatgetriebes über Kennfelder (KF(i)) bestimmt wird, wobei dieses eine Zuordnung von Leistungsvorgabe des Fahrers (DKI) und Abtriebsdrehzahl (nAB) der Kupplung darstellt.

10. Verfahren nach Anspruch 10, **dadurch gekennzeichnet, daß** das geregelte Moment im zweiten Fahrzustand (MK(RE)) maßgeblich aus dem Soll-/Ist-Vergleich der Drehzahldifferenz (dnK_SW, dnK_IST) der Kupplung und einer Leistungsvorgabe (DKI) eines Fahrers mittels eines Reglers bestimmt wird.

11. Verfahren nach Anspruch 10, **dadurch gekennzeichnet, daß** der Regler einen begrenzten Integrator beinhaltet, wobei dem Integrator als Eingangsgrößen die Regelabweichung aus dem Soll-/Ist-Vergleich der Drehzahldifferenz (dnK_SW, dnK_IST) der Kupplung , die Verstellgeschwindigkeit der Leistungsvorgabe (DKI) und dem Verhältnis Ist- zu Sollwert der Differenzdrehzahl (dnK_IST/dnK_SW) der Kupplung zugeführt wird.

12. Verfahren nach Anspruch 10, **dadurch gekennzeichnet, daß** sich der Sollwert der Differenzdrehzahl (dnK_SW) der Kupplung aus der Addition eines Sollwert-Offset (dnLS_SW) und einer gangabhängigen Differenzdrehzahl (dn_SW(i)) der Kupplung ergibt.

13. Verfahren nach Anspruch 12, **dadurch gekennzeichnet, daß** bei einem Übergang von dem ersten oder dritten Fahrzustand in den zweiten Fahrzustand der Sollwert der Differenzdrehzahl (dnK_SW) über ein dynamisches Verzögerungsglied geleitet wird, wobei als dessen Anfangswert der aktuelle Istwert der Differenzdrehzahl (dnK_IST) gesetzt wird.

14. Verfahren nach Anspruch 12, **dadurch gekennzeichnet, daß** im zweiten Zustand der Sollwert-Offset der Differenzdrehzahl (dnLS_SW) der Kupplung während einer Übersetzungsänderung von einer ersten (i1) in eine zweite Übersetzungsstufe (i2) des Automatgetriebes in der Lastübernahme- oder Gradienteinstellphase erhöht wird.

15. Verfahren nach Anspruch 13, **dadurch gekennzeichnet, daß** bei einer Fahrzeuggeschwindigkeit (v) kleiner einem Grenzwert (GW) eine erhöhte Differenzdrehzahl (dn_SW(i)) der Kupplung als Abwürgeschutz über das jeweilige zweite Kennfeld (KF(i)) eingestellt wird.

16. Verfahren nach Anspruch 12, **dadurch gekennzeichnet, daß** im zweiten Zustand bei einer Fahrzeuggeschwindigkeit (v) kleiner einem Grenzwert (GW) eine erhöhte Differenzdrehzahl (dn_SW(i)) der Kupplung als Abwürgeschutz berechnet wird, wobei die Differenzdrehzahl (dn_SW(i)) größer eingestellt ist als die Differenz aus der minimalsten Drehzahl der Brennkraftmaschine (n_MOT_MIN) und der Abtriebsdrehzahl der Kupplung (nAB).

17. Verfahren nach Anspruch 1, **dadurch gekennzeichnet, daß** das Druckniveau (pAK) der Kupplung sich im dritten Zustand aus einem von einer oder mehreren der folgenden Größen abhängigen Druckwert ergibt: Drosselklappe, Bremsbetätigung, Bremsdruck, Motormoment, Lastschaltung, oder ähnliches und daß das Druckniveau (pAK) eine gesteuerte Größe ist.

18. Vorrichtung zur Durchführung eines Verfahrens zum Steuern und Regeln einer Kupplung in einem stufenlosen Automatgetriebe für ein Kraftfahrzeug, insbesondere eines Verfahrens nach einem der vorgenannten Ansprüche, mit einem elektronischen Steuergerät mit einem ersten und einem zweiten Regelkreis und einem dritten Regelkreis, der über ein Entkopplungsnetzwerk mit dem ersten und zweiten Regelkreis verbunden ist, wobei die Regelgröße des ersten Regelkreises dem Istwert der Motordrehzahl (n_MOT_IST) und die Regelgröße des zweiten Regelkreises dem Istwert einer Differenzdrehzahl (dnK_IST) der Kupplung äquivalent ist und der Istwert der Differenzdrehzahl (dnK_IST) der Kupplung nicht bis zu einem Wert Null nachgeführt ist.

19. Vorrichtung nach Anspruch 18, **dadurch gekennzeichnet, daß** das Entkopplungsnetzwerk einen ersten und einen zweiten Signalweg zwischen dem ersten und dritten sowie dem zweiten und dritten Regelkreis vorsieht.

## Claims

1. Method of controlling and regulating a clutch in a continuously variable transmission for a motor vehicle, in which an electronic control system determines the behaviour of the clutch by means of a first and a second closed-loop control circuit, whereby two driving states are provided and the first state corresponds to a starting sequence below a vehicle threshold speed during traction mode, the second state corresponds to driving above a vehicle threshold speed and a continuous speed change can be operated from a first (i1) to a second transmission ratio (i2), the first closed-loop control circuit being used to control and regulate the clutch during the first driving state, the control variable of which is equivalent to the actual value of the engine speed (n_MOT_IST), and a second closed-loop control circuit being used for the second driving state, the control variable of which is equivalent to the actual value of a differential speed (dnK_IST) of the clutch, **characterised in that** during a third driving state corresponding to driving below a vehicle threshold speed in thrust operation, the clutch is pressurised at a controlled pressure value dependent on various influencing variables and the actual value of the differential speed (dnK_IST) of the clutch is not brought down to a value of zero.

2. Method as claimed in claim 1, **characterised in that** the change in speed for control purposes is determined by a third closed-loop control circuit and the first and third or the second and third closed-loop control circuits are connected to one another via a decoupling network, the decoupling network respectively having a first and a second signal path.

3. Method as claimed in claim 2, **characterised in that** during a speed change from a first (i1) to a second transmission ratio (i2) of the automatic transmission during the first driving state, the first closed-loop control circuit acts on the third closed-loop control circuit by means of the decoupling network via a first signal path and the third closed-loop control circuit acts on the first closed-loop control circuit by means of the decoupling network via a second signal path.

4. Method as claimed in claim 2, **characterised in that** during a speed change from a first (i1) to a second transmission ratio (i2) of the automatic transmission during the second driving state, the second closed-loop control circuit acts on the third closed-loop control circuit by means of the decoupling network via a first signal path and the third closed-loop control circuit acts on the second closed-loop control circuit by means of the decoupling network via a second signal path.

5. Method as claimed in claim 1, **characterised in that** the pressure level (pAK) of the clutch in the first and in the second state are calculated on the basis of the sum of an offset value (pAK_OFF) and a summation value (pSUM) giving (pAK = pAK_OFF + pSUM), the summation value pSUM being determined for control purposes on the basis of the balance of the controlled torque (MK(ST)) of the clutch, the regulated summation torque (MK(RE)') of the clutch and decoupling load switching torque (MLS_ENT)
(pSUM = f(MK(ST), MK(RE)', MLS_ENT)).

6. Method as claimed in claim 5, **characterised in that** the controlled torque (MK(ST)) is determined for control purposes from the dynamic torque of the clutch (MDYN_K) and the engine torque (MMOT)
(MK(ST) = f(MDYN_K, MMOT).

7. Method as claimed in claim 5, **characterised in that** the regulated summation torque (MK(RE)') of the clutch is determined from the dynamic engine torque (MDYN_MOT) and a regulated torque (MK(RE)) of the clutch.

8. Method as claimed in claim 7, **characterised in that** the regulated torque (MK(RE)) in the first driving state is determined for control purposes from a desired/actual comparison of a variable corresponding to the engine speed and a desired output (DKI) based on driver operation by means of a controller.

9. Method as claimed in one of the preceding claims, **characterised in that** the transmission-dependent desired differential speed (n_Mot_SW(i)) for a starting gear of the automatic transmission is determined by means of a characteristics maps (KF (i)), representing a correlation between desired output based on driver operation (DKI) and output speed (nAB) of the clutch.

10. Method as claimed in claim 10, **characterised in that** the regulated torque in the second driving state (MK(RE)) is determined for control purposes from a desired/actual comparison of the speed differential (dnK_SW, dnK_IST) of the clutch and a desired driver output (DKI) by means of a controller.

11. Method as claimed in claim 10, **characterised in that** the controller contains a limited integrator, the input variables applied to the integrator being based on the control deviation derived from the desired/actual comparison of the speed differential (dnK_SW, dnK-IST) of the clutch, the adjustment speed of the desired output (DKI) and the ratio of actual to desired value of the speed differential (dnK_IST/dnK_SW) of the clutch.

12. Method as claimed in claim 10, **characterised in that** the desired value of the differential speed (dnK_SW) of the clutch is obtained by adding a desired value-offset (dnLS_SW) and a transmission-dependent differential speed (dn_SW(i)) of the clutch.

13. Method as claimed in claim 12, **characterised in that** during a switch from the first or third driving state to the second driving state, the desired value of the differential speed (dnK_SW) is fed via a dynamic time-delay element, the actual value of the current differential speed (dnK_IST) being used as the initial value thereof.

14. Method as claimed in claim 12, **characterised in that** in the second state, the desired value-offset of the differential speed (dnLS-SW) of the clutch is increased during a speed change from a first (i1) to a second transmission stage (i2) of the automatic transmission in the load-assuming or gradient setting phase.

15. Method as claimed in claim 13, **characterised in that** at a vehicle speed (v) lower than a threshold value (GW), an increased differential speed (dn_SW(i)) of the clutch is set as a protection against stalling by means of the respective second characteristics map (KF(i)).

16. Method as claimed in claim 12, **characterised in that** in the second driving state, if a vehicle speed (v) is lower than a threshold value (GW), an increased differential speed (dn_SW(i)) of the clutch is calculated as a protection against stalling, the speed differential dn_SW(i) being set higher than the difference between the absolute minimum speed of the internal combustion engine (n_MOT_MIN) and the output speed of the clutch (nAB).

17. Method as claimed in claim 1, **characterised in that** in the third driving state, the pressure level (pAK) of the clutch is derived from a pressure value which is dependent on one or more of the following variables: throttle valve position, brake operation, braking pressure, engine torque, load changing or similar, and the pressure value (pAK) is a controlled variable.

18. System for implementing a method of controlling and regulating a clutch in a continuously variable transmission for a motor vehicle, in particular a method as claimed in one of the preceding claims, with an electronic control system with a first and a second closed-loop control circuit, which is connected via a decoupling network to the first and second controlled-loop control circuit and a third closed-loop control circuit, in which the control variable of the first closed-loop control circuit is the actual value of the engine speed (n_MOT_IST) and the control variable of the second closed-loop control circuit is the actual value of a differential speed (dnK_IST) of the clutch and the actual value of the differential speed (dnK_IST) of the clutch is not brought down to a value of zero.

19. System as claimed in claim 18, **characterised in that** the decoupling network has a first and a second signal path between the first and the third as well as the second and third closed-loop control circuit.

## Revendications

1. Procédé pour commander et régler un embrayage dans une transmission automatique variable en continu, pour un véhicule automobile, dans lequel un appareil de commande électronique détermine le comportement de l'embrayage au moyen d'un premier, respectivement d'un deuxième circuit de réglage, et dans lequel il est prévu deux états de conduite, le premier état correspondant à une opération de démarrage au-dessous d'une vitesse limite du véhicule dans le fonctionnement en traction, le deuxième état correspondant à la conduite au-dessus d'une vitesse limite du véhicule, et dans lequel une modification du rapport de transmission par variation continue peut s'effectuer pour passer d'un premier rapport de transmission (i1) à un deuxième rapport de transmission (i2), le premier circuit de réglage étant utilisé pour la commande et le réglage de l'embrayage pendant le premier état de conduite et la grandeur réglée de ce circuit étant équivalente à la valeur réelle de la vitesse de rotation du moteur (n_MOT_IST), tandis que, dans le deuxième état de conduite, on utilise un deuxième circuit de réglage dont la grandeur réglée est équivalente à la valeur réelle de la vitesse de rotation différentielle (dnK_IST) de l'embrayage, **caractérisé en ce que**, pendant un troisième état de conduite qui correspond à la conduite au-dessous d'une vitesse limite de véhicule dans le fonctionnement en poussée, l'embrayage est chargé avec une valeur de pression commandée qui dépend de différentes valeurs d'influence, et **en ce que** la valeur réelle de la vitesse de rotation différentielle (dnK_IST) de l'embrayage n'est pas poursuivie jusqu'à une valeur nulle.

2. Procédé selon la revendication 1, **caractérisé en ce que** la modification du rapport de transmission est déterminée dans une mesure prédominante par un troisième circuit de réglage et le premier et le troisième, respectivement le deuxième et le troisième circuit de réglage sont connectés entre eux par l'intermédiaire d'un réseau de découplage, le réseau de découplage présentant pour chaque connexion un premier et un deuxième trajet de signaux.

3. Procédé selon la revendication 2, **caractérisé en ce que**, dans le cas d'une modification du rapport de transmission passant d'un premier (i1) à un deuxième rapport de transmission (i2) de la transmission automatique pendant le premier état de conduite, le premier circuit de réglage agit sur le troisième circuit de réglage au moyen du réseau de découplage, en passant par le premier trajet de signaux et le troisième circuit de réglage agit sur le premier circuit de réglage au moyen du réseau de découplage en passant par le deuxième trajet de signaux.

4. Procédé selon la revendication 2, **caractérisé en ce que**, dans le cas d'une modification du rapport de transmission passant d'un premier (i1) à un deuxième rapport de transmission (i2) de la transmission automatique pendant le deuxième état de conduite, le deuxième circuit de réglage agit sur le troisième circuit de réglage au moyen du réseau de découplage, en passant par le premier trajet de signaux, et le troisième circuit de réglage agit sur le deuxième circuit de réglage au moyen du réseau de découplage, en passant par le deuxième trajet de signaux.

5. Procédé selon la revendication 1, **caractérisé en ce que** le niveau de pression (pAK) de l'embrayage est obtenu dans le premier état et dans le deuxième état, à partir d'une valeur de décalage (pAK_OFF) et d'une valeur somme (pSUM) (pAK = pAK_OFF + pSUM), la valeur somme (pSUM) étant déterminée dans une mesure prédominante à partir du bilan du moment commandé (MK (ST)) de l'embrayage, du moment somme réglé (MK (RE)') de l'embrayage et du moment de changement en charge découplant (MLS_ENT), (pSUM = f (MK (ST), MK (RE'), MLS_ENT)).

6. Procédé selon la revendication 5, **caractérisé en ce que** le moment commandé (MK (ST)) est déterminé dans une mesure prédominante à partir du moment dynamique de l'embrayage (MDYN_K) et du moment moteur (MMOT), (MK (ST) = f (MDYN_K, MMOT).

7. Procédé selon la revendication 5, **caractérisé en ce que** le moment somme réglé (MK (RE)') de l'embrayage est déterminé à partir du moment moteur dynamique (MDYN_MOT) et d'un moment réglé (MK (RE)) de l'embrayage.

8. Procédé selon la revendication 7, **caractérisé en ce que** le moment réglé (MK (RE)) dans le premier état de conduite est déterminé au moyen d'un régulateur dans une mesure prédominante à partir de la comparaison consigne/réel d'une grandeur équivalente à la vitesse de rotation du moteur et d'une demande de puissance (DKI) d'un conducteur.

9. Procédé selon l'une des revendications précédentes, **caractérisé en ce que** la vitesse de rotation de consigne qui dépend du rapport de transmission (n_Mot_SW (i)) est déterminée pour un rapport de démarrage de la transmission automatique au moyen de diagrammes (KF (i)), ceci représentant une association de la demande de puissance du conducteur (DKI) et de la vitesse de rotation de sortie (nAB) de l'embrayage.

10. Procédé selon la revendication 10, **caractérisé en ce que** le moment réglé dans le deuxième état de conduite (MK (RE)) est déterminé au moyen d'un régulateur dans une mesure prédominante à partir de la comparaison consigne/réel de la différence de vitesse de rotation (dnK_SW, dnK_IST) de l'embrayage et d'une demande de puissance (DKI) d'un conducteur.

11. Procédé selon la revendication 10, **caractérisé en ce que** le régulateur renferme un intégrateur limité, dans lequel intégrateur, sont fournis, comme grandeurs d'entrée, l'écart de réglage tiré de la comparaison consigne/réel de la différence de vitesse de rotation (dnK_SW, dnK_IST) de l'embrayage, la vitesse de modification de la demande de puissance (DKI) et le rapport entre valeur réelle et valeur de consigne de la vitesse de rotation différentielle (dnK_IST / dnK_SW) de l'embrayage.

12. Procédé selon la revendication 10, **caractérisé en ce que** la valeur de consigne de la vitesse de rotation différentielle (dnK_SW) de l'embrayage est obtenue par l'addition d'un décalage de valeur de consigne (dnLS_SW) et d'une vitesse de rotation différentielle (dn_SW (i)) de l'embrayage qui dépend du rapport.

13. Procédé selon la revendication 12, **caractérisé en ce que**, lors d'un passage du premier ou du troisième état de conduite au deuxième état de conduite, la valeur de consigne de la vitesse de rotation différentielle (dnK_SW) est transmise par l'intermédiaire d'un organe à retard dynamique, la valeur réelle actuelle de la vitesse de rotation différentielle (dnK_IST) étant prise comme valeur initiale pour cet organe.

14. Procédé selon la revendication 12, **caractérisé en ce que**, dans le deuxième état, le décalage de valeur de consigne de la vitesse de rotation différentielle (dnLS_SW) de l'embrayage est augmenté pendant une modification du rapport de transmission passant d'un premier étage (i1) à un deuxième étage de rapport de transmission (i2) de la transmission automatique dans la phase de prise de la charge ou de réglage du gradient.

15. Procédé selon la revendication 13, **caractérisé en ce que**, à une vitesse du véhicule (v) inférieure à une valeur limite (GW), il s'établit une vitesse de rotation différentielle augmentée (dn_SW (i)) de l'embrayage en tant que protection anticalage par l'intermédiaire du deuxième diagramme (KF (i)).

16. Procédé selon la revendication 12, **caractérisé en ce que**, dans le deuxième état, à une vitesse du véhicule (v) inférieure à une valeur limite (GW), une vitesse de rotation différentielle augmentée (dn_SW (i)) de l'embrayage est calculée en tant que protection anticalage, la vitesse de rotation différentielle (dn_SW (i)) étant réglée à un niveau plus élevé que la différence entre la vitesse de rotation extrême minimale du moteur à combustion interne (n_MOT_MIN) et de la vitesse de rotation de sortie de l'embrayage (nAB).

17. Procédé selon la revendication 1, **caractérisé en ce que** le niveau de pression (pAK) de l'embrayage est obtenu dans le troisième état à partir d'une valeur de pression qui dépend d'une ou de plusieurs des grandeurs suivantes : volet de réglage, actionnement du frein, pression du frein, moment moteur, changement en charge ou analogue, et **en ce que** le niveau de pression (pAK) est une grandeur commandée.

18. Dispositif pour la mise en oeuvre d'un procédé pour commander et régler un embrayage dans une transmission automatique variable en continu pour un véhicule automobile, en particulier d'un procédé selon l'une des revendications précitées, comprenant un appareil de commande électronique qui comporte un premier circuit de réglage, un deuxième circuit de réglage et un troisième circuit de réglage, qui est connecté au premier et au deuxième circuit de réglage par l'intermédiaire d'un réseau de découplage, la grandeur réglée du premier circuit de réglage étant la valeur réelle de la vitesse de rotation du moteur (n_MOT_IST) et la grandeur réglée du deuxième circuit de réglage étant équivalente à la valeur réelle d'une vitesse de rotation différentielle (dnK_IST) de l'embrayage, la valeur réelle de la vitesse de rotation différentielle (dnK_IST) de l'embrayage n'étant pas poursuivie jusqu'à une valeur nulle.

19. Dispositif selon la revendication 18, **caractérisé en ce que** le réseau de découplage prévoit un premier et un deuxième trajet de signaux entre le premier et le troisième circuit de réglage ainsi qu'entre le deuxième et le troisième circuit de réglage.
